Europäisches Patentamt

European Patent Office

Office européen des brevets

(11) Numéro de publication : **0 380 401 B1**

(12) **FASCICULE DE BREVET EUROPEEN**

(19)

(45) Date de publication du fascicule du brevet :
**16.09.92 Bulletin 92/38**

(21) Numéro de dépôt : **90400176.5**

(22) Date de dépôt : **23.01.90**

(51) Int. Cl.⁵ : **F16D 23/14**

(54) **Butée d'embrayage à autocentrage élastique.**

(30) Priorité : **25.01.89 FR 8900908**

(43) Date de publication de la demande :
**01.08.90 Bulletin 90/31**

(45) Mention de la délivrance du brevet :
**16.09.92 Bulletin 92/38**

(84) Etats contractants désignés :
**DE ES GB IT SE**

(56) Documents cités :
**FR-A- 2 452 634**
**GB-A- 2 044 385**
**US-A- 4 815 867**

(73) Titulaire : **SKF FRANCE**
**8, Avenue Réaumur**
**F-92142 Clamart Cédex (FR)**

(72) Inventeur : **Caron, Fabrice**
**2, Allée Arcoat**
**F-78210 Montigny-Le-Bretonneux (FR)**

(74) Mandataire : **Casalonga, Axel et al**
**BUREAU D.A. CASALONGA - JOSSE**
**Morassistrasse 8**
**W-8000 München 5 (DE)**

## Description

La présente invention est relative aux butées d'embrayage à autocentrage ou auto-alignement élastique guidé pour les dispositifs d'embrayage à disque ou diaphragme utilisés en particulier dans les véhicules automobiles. Une telle butée d'embrayage comprend un palier à roulement, par exemple à billes, et une douille de guidage rigide pouvant coulisser axialement par rapport à un tube-guide. Des moyens élastiques disposés entre le palier à roulement et la douille de guidage permettent l'alignement et l'autocentrage de la butée par rapport à l'axe de rotation du dispositif de débrayage à chaque opération de débrayage.

L'une des bagues du palier à roulement est tournante et transmet l'effort de débrayage en venant en appui direct avec le diaphragme ou en restant continuellement en contact avec celui-ci tandis que l'autre bague, non tournante, reçoit la poussée d'un organe de commande tel qu'une fourchette de débrayage par l'intermédiaire d'un élément solidaire de la douille de guidage. Il arrive que le palier à roulement ne soit pas exactement centré par rapport à l'arbre de la boîte de vitesse ou parfaitement aligné par rapport à l'axe de rotation du diaphragme de l'embrayage. Par ailleurs l'axe géométrique du diaphragme de l'embrayage, son axe de rotation et l'axe de l'arbre de la boîte de vitesse ou du tube-guide ne coïncident pas toujours exactement ce qui rend nécessaire de prévoir une possibilité de déplacement radial de la butée au moment de chaque débrayage.

On déjà prévu, par exemple dans le brevet français 2 452 634 (SKF Compagnie d'Applications Mécaniques), une douille de guidage munie d'une pluralité de languettes de faible longueur sensiblement axiales entrant en contact avec la bague non tournante du palier à roulement de façon à permettre un auto-centrage ou auto-alignement élastique par rapport à la douille de guidage. Le palier à roulement est en outre maintenu sur la douille de guidage au moyen de plots de blocage limitant le déplacement axial du palier à roulement et permettant d'éviter tout démontage inopiné par rapport à la douille de guidage.

Un tel mode de réalisation présente différents inconvénients. Tout d'abord en effet le montage du palier à roulement sur la douille de guidage, réalisée généralement en matière plastique moulée chargée de fibres de verre c'est-à-dire en une matière relativement rigide et cassante, est difficile et risque d'entraîner la formation de copeaux de matière plastique lors de l'encliquetage sur les plots de blocage de la douille de guidage. Dans le cas d'un palier à roulement à bagues massives, un tel montage est même totalement impossible car les arrondis généralement prévus sur de telles bagues nécessiteraient des déformations trop importantes des plots de blocage de la douille de guidage en matière plastique.

Par ailleurs on constate en pratique que la longueur réduite des languettes d'autocentrage ne permet pas toujours d'obtenir un autocentrage de souplesse et d'amplitude suffisantes.

La présente invention a pour objet en particulier de résoudre ces inconvénients et de permettre la réalisation d'une butée d'embrayage dans laquelle la souplesse et l'amplitude des mouvements d'auto-alignement ou d'autocentrage sont augmentées, le montage par encliquetage du palier à roulement sur la douille de guidage étant en outre rendu plus facile en raison d'une diminution de la rigidité de déformation des moyens de maintien en position et d'encliquetage.

La présente invention a également pour objet la réalisation de moyens d'autocentrage et d'encliquetage du palier à roulement par rapport à la douille de guidage qui puissent être utilisés à la fois pour un palier à roulement comportant des bagues embouties en tôle mince ou des bagues massives.

La présente invention a encore pour objet une structure de douille de guidage intégrant des moyens élastiques d'auto-alignement ou d'autocentrage et des moyens d'encliquetage du roulement par rapport à la douille de guidage , l'ensemble pouvant être conçu pour une butée d'embrayage à bague extérieure tournante ou à bague intérieure tournante.

Enfin la présente invention a également pour objet une configuration de douille de guidage à languettes axiales élastiques adaptées au cas où la bague extérieure tournante présente une collerette de raidissage pénétrant partiellement dans l'alésage du palier à roulement.

La butée d'embrayage à autocentrage élastique guidé selon la présente invention comprend un palier à roulement muni d'éléments roulants montés entre une bague non tournante et une bague tournante capable de coopérer avec un dispositif d'embrayage. Le palier à roulement est monté sur une douille de guidage présentant une portion cylindrique capable de coulisser axialement par rapport à un tube-guide et une collerette radiale en contact de guidage avec une portion de surface radiale de la bague non tournante de la butée . La collerette radiale est en outre adaptée pour transmettre les efforts radiaux d'un organe de commande tel qu'une fourchette de débrayage. Une pluralité de languettes élastiques s'étendant axialement à quelque distance radiale du tube-guide forme une couronne disposée entre le palier à roulement et la portion cylindrique de la douille de guidage , au moins certaines desdites languettes entrant en contact, au voisinage de leur extrémité libre opposée à la collerette radiale de la douille de guidage , avec la bague non tournante en vue de l'autocentrage élastique de la butée. Selon l'invention, le contact se fait par une portée de contact capable de coopérer avec la bague non tournante et une excroissance formant crochet est prevue, afin d'assurer la liaison axiale entre le palier à roulement et la douille de guidage.

Les languettes élastiques sont précontraintes en flexion radiale contre la bague non tournante du palier à roulement de manière à agir sur celle-ci en vue de l'autocentrage du palier à roulement lors d'une opération de débrayage. Les languettes axiales pouvant fléchir radialement assurent ainsi à la fois la fonction d'auto-alignement ou d'autocentrage élastique par flexion radiale et la fonction de retenue axiale du palier à roulement par rapport à la douille de guidage.

La portée de contact située à l'extrémité libre des languettes présente de préférence une dimension axiale telle qu'elle ne coopère qu'avec une zone de contact de la bague non tournante située dans la partie de ladite bague non tournante la plus éloignée axialement de la collerette radiale de la douille de guidage.

La base des languettes est avantageusement située au voisinage de la collerette radiale de la douille de guidage de sorte que les languettes s'étendent axialement sur la majeure partie de la dimension axiale du palier à roulement. Grâce à cette configuration préférée de l'invention, on obtient d'excellentes caractéristiques de flexion des languettes élastiques. Il en résulte d'excellentes caractéristiques d'autocentrage de la butée et une grande facilité de montage par encliquetage du palier à roulement sur la douille de guidage quelle que soit par ailleurs la structure des bagues du palier à roulement, ce montage étant facilité par la souplesse des crochets d'extrémité des languettes.

L'invention permet donc de réaliser une butée d'embrayage autocentreuse dans laquelle, grâce à la conception particulière des moyens d'autocentrage et de connexion axiale entre le palier à roulement et la douille de guidage exploitant au mieux le fléchissement des languettes élastiques sur une longueur suffisante, l'opération d'encliquetage du palier à roulement sur la douille de guidage est facilitée et un bon autocentrage élastique de la butée en fonctionnement est obtenu.

Dans un premier mode de réalisation de l'invention la bague non tournante est la bague intérieure du palier à roulement. La douille de guidage comprend concentriquement à sa portion cylindrique une couronne de languettes axiales élastiquement déformables radialement présentant à leurs extrémités des crochets tournés vers l'extérieur ainsi que des portées de contact également dirigées vers l'extérieur, venant coopérer avec l'extrémité de l'alésage de la bague intérieure qui se trouve à l'opposé de la collerette radiale de la douille de guidage. Les languettes sont montées avec une légère précontrainte radiale dans l'alésage de façon qu'il y ait toujours contact entre les languettes et la bague non tournante du palier à roulement, l'autocentrage étant ainsi assuré en permanence.

Dans le cas ou le palier à roulement présente des bagues réalisées par emboutissage d'une tôle mince, la bague tournante extérieure peut présenter une portion de raidissage. Selon l'invention la couronne des languettes élastiques s'étend alors de préférence au-delà de la portion cylindrique de la douille de guidage, la portion de raidissage de la bague tournante extérieure venant se loger à l'intérieur de l'extrémité de la couronne des languettes élastiques.

Dans un deuxième mode de réalisation de l'invention, la bague non tournante du palier à roulement est au contraire la bague extérieure. Dans ce cas, la couronne de languettes élastiques d'autocentrage est plus éloignée radialement de la portion cylindrique de la douille de guidage que dans le mode de réalisation précédent. La base des languettes élastiques est voisine de la partie radiale de plus grand diamètre de la collerette radiale de la douille de guidage. Les crochets et les portées de contact sont tournés vers l'intérieur.

Dans certains modes de réalisation il peut être utile d'adjoindre un dispositif d'étanchéité. A cet effet, on prévoit selon l'invention, de monter un joint d'étanchéité à l'extrémité libre de la couronne de languettes d'une façon telle que le joint entre en contact de frottement avec une portion de la bague tournante. Le joint peut être avantageusement monté sur les excroissances formant crochets d'extrémité des languettes et maintenu serré entre les languettes élastiques et la bague non tournante du roulement.

Dans un mode de réalisation avantageux, le joint présente une partie annulaire jouant le rôle de portée de contact pour la bague non tournante, les languettes présentant alors une surface sensiblement plane en regard de la bague non tournante du palier à roulement.

Dans un autre mode de réalisation de l'invention où les conditions d'utilisation de la butée d'embrayage rendent nécessaire l'utilisation d'une douille de guidage en métal, par exemple en métal moulé sous pression tel que de l'aluminium, la couronne de languettes élastiques est solidaire d'un manchon intermédiaire monté sur la portion cylindrique de la douille de guidage. A cet effet la portion cylindrique de la douille de guidage peut présenter avantageusement une portée tronconique délimitée par une ou plusieurs excroissances d'extrémité pour le montage et le maintien axial du manchon intermédiaire. Le manchon intermédiaire vient s'emboîter sur ladite portée tronconique et est retenu axialement sur celle-ci par les excroissances ou par un redan de la portion cylindrique de la douille de guidage.

Pour favoriser un bon encliquetage du manchon intermédiaire sur la douille de guidage, on peut prévoir de munir le manchon intermédiaire d'un certain nombre de fentes ou encoches axiales sur sa périphérie afin de lui donner une meilleure souplesse radiale.

Dans les autres modes de réalisation, la couronne des languettes élastiques constituera au contraire de préférence une seule pièce moulée en matière synthétique avec la douille de guidage.

Par ailleurs la collerette radiale de la douille de guidage peut comprendre avantageusement une plaque métallique fixée sur la douille de guidage par exemple par surmoulage afin de servir d'appui à la bague non tournante du palier à roulement sur l'une de ses faces et d'appui pour la fourchette de commande de débrayage par son autre face. L'appui de la fourchette de commande peut également se faire par l'intermédiaire d'une plaque d'usure rapportée présentant une surface superficielle de dureté accrue.

L'invention sera mieux comprise à l'étude de quelques modes de réalisation pris à titre d'exemples nullement limitatifs et illustrés par les dessins annexés sur lesquels :

la figure 1 est une vue de côté partiellement en coupe d'un premier mode de réalisation d'une butée d'embrayage conforme à l'invention;

la figure 2 est une vue partielle en perspective des extrémités des languettes élastiques de la butée d'embrayage de la figure 1;

la figure 3 est une vue de côté en coupe partielle analogue à la figure 1 d'un autre mode de réalisation d'une butée conforme à l'invention;

la figure 4 est une vue agrandie de la portion de la figure 3 entourée par un cercle montrant la structure du joint d'étanchéité;

la figure 5 est une vue en coupe partielle d'un troisième mode de réalisation d'une butée d'embrayage selon l'invention;

la figure 6 est une demi-coupe d'un autre mode de réalisation d'une butée d'embrayage selon l'invention comportant un palier à roulement à bagues massives, la bague tournante étant la bague extérieure; et

la figure 7 est une demi-coupe d'un autre mode de réalisation d'une butée d'embrayage selon l'invention comportant un palier à roulement à bagues, massives, la bague tournante étant la bague intérieure.

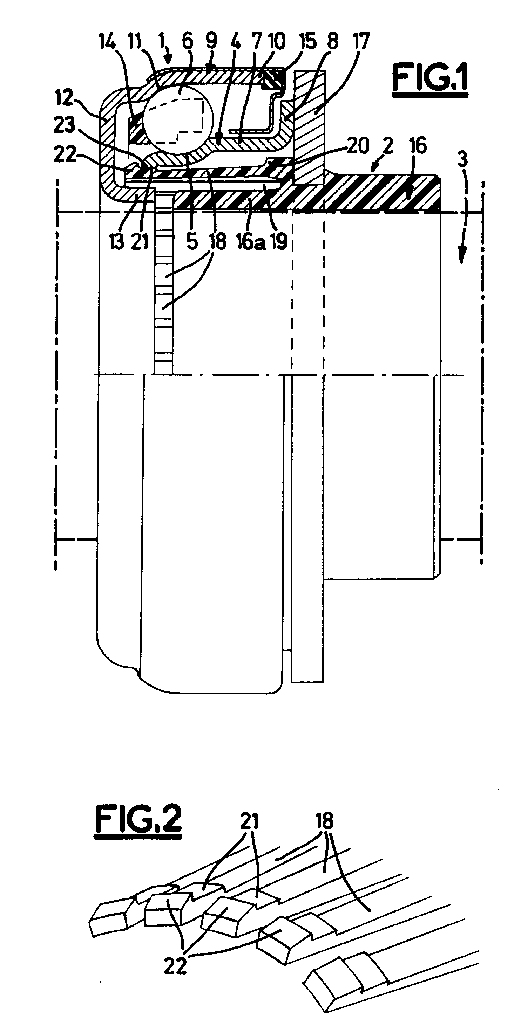

Tel qu'elle est représentée sur les figures 1 et 2, la butée d'embrayage comporte un palier à roulement 1 et une douille de guidage 2 capable de coulisser axialement sur un tube-guide 3. Le palier à roulement 1 comporte une bague intérieure de roulement non tournante 4 à paroi mince réalisée par emboutissage d'une tôle ou d'un tube, présentant un chemin de roulement torique 5 pour une rangée de billes 6 et une portion tubulaire 7 prolongée extérieurement par une collerette radiale 8 dirigée vers l'extérieur. Le palier à roulement 1 se complète par une bague extérieure tournante 9 également à paroi mince réalisée par emboutissage d'une tôle ou d'un tube. Ladite bague extérieure 9 comporte une partie tubulaire 10 et un chemin de roulement torique 11 pour les billes 6 qui se prolonge par une collerette sensiblement radiale 12 dirigée vers l'intérieur, capable d'entrer en contact avec la surface d'un diaphragme d'embrayage d'un véhicule automobile non représenté sur la figure. La collerette 12 se prolonge vers l'intérieur par une portion tubulaire de raidissage 13 revenant dans la même direction que la portion cylindrique 10 et pénétrant légèrement à l'intérieur de l'alésage du palier à roulement 1. Les billes 6 sont maintenues par une cage 14, le roulement 1 étant protégé par un ensemble flasque/joint 15.

La douille de guidage rigide 2 présente une portion cylindrique 16 en contact de coulissement avec la surface du tube-guide 3. Cette portion cylindrique 16 est réalisée en matière plastique moulée de préférence chargée de façon à présenter des caractéristiques de rigidité convenables tout en réduisant le frottement avec la surface du tube-guide 3. La douille de guidage 2 comprend également une collerette radiale 17 constituée ici par une pièce annulaire métallique fixée à la portion cylindrique 16 par surmoulage lors du moulage. On comprendra que la douille de guidage 2 puisse être réalisée en une seule pièce venue de moulage. Par ailleurs la fixation entre la collerette radiale 17 et la portion cylindrique 16 peut être faite par d'autres moyens que le surmoulage par exemple par encliquetage, verrouillage à baïonnette, vissage ou tout autre moyen approprié.

La collerette radiale 8 de la bague intérieure non tournante 4 présente une portion de surface radiale en contact de frottement avec l'une des faces de la collerette radiale 17. Sur l'autre face, de la collerette radiale 17 peut venir prendre appui un organe de commande ou une fourchette de débrayage non représentée sur la figure exerçant un effort axial sur l'ensemble de la butée en vue d'une opération de débrayage.

Une pluralité de languettes élastiques 18 s'étendant axialement en forme de couronne sont disposées entre la bague intérieure non tournante 4 et la partie 16a de la portion cylindrique 16 qui se trouve à l'intérieur de l'alésage du roulement 1. La couronne de languettes élastiques 18 se trouve donc radialement à l'extérieur de la portion cylindrique 16a en laissant subsister un espace 19. La base 20 des différentes languettes 18 est située au voisinage de la collerette radiale 17. Au contraire l'extrémité libre des languettes 18, à l'opposé de leur base 20, se trouve au-delà de l'extrémité de la bague intérieure non tournante 4. Dans ces conditions on voit que la dimension axiale totale des languettes élastiques 18 est telle qu'elles s'étendent axialement sur la majeure partie de la dimension axiale du roulement 1. Les languettes axiales 18 peuvent donc fléchir radialement à partir de leur base 20 lors d'un mouvement d'auto-alignement ou d'autocentrage du palier à roulement 1 par rapport à la douille de guidage 2. On notera que ce mouvement d'auto-alignement se fait radialement, le roulement 1 étant guidé par le contact de la portion radiale 8 de la bague intérieure 4 avec la collerette radiale 17.

Au voisinage de leur extrémité libre, les languettes 18 présentent une portée de contact 21 (figure 2) qui est, dans l'exemple illustré, délimitée vers l'extrémité libre de la languette 18 par une excroissance 22 formant crochet d'encliquetage. Les portées 21 viennent en contact avec une surface cylindrique d'extrémité 23 de la bague intérieure non tournante 4. Dans ces conditions les portées de contact 21 sont capables de coopérer avec la bague intérieure non tournante 4 en vue de l'autocentrage élastique de la butée de l'invention.

Lors de l'assemblage du palier à roulement 1 sur la douille de guidage 2 les crochets 22 placés aux extrémités libres des languettes élastiques 18 permettent grâce au fléchissement élastique des languettes 18, le passage du palier à roulement 1. Après assemblage du roulement 1 sur la douille de guidage 2, il subsiste un léger jeu axial visible sur la figure 1 entre les faces de retenue des crochets 22 et l'extrémité correspondante de la bague intérieure non tournante 4. Ce jeu facilite le montage et permet aux languettes 18 de fléchir librement lors des opérations d'autocentrage de la butée.

La disposition et la configuration des languettes élastiques 18 sont telles qu'après assemblage du palier à roulement 1 sur la douille de guidage 2 comme illustré sur la figure 1, les languettes élastiques 18 soient précontraintes en flexion radiale sur la bague intérieure non tournante 4 de manière à rester toujours en contact avec celle-ci par les surfaces de portée 21 réalisant ainsi un autocentrage efficace et permanent de la butée.

Comme on peut le noter sur la figure 1, les portées de contact 21 sont de faibles dimensions axiales (voir également figure 2) de sorte que le contact ne se fait qu'avec l'extrémité 23 de la bague intérieure non tournante 4. Cette extrémité 23 étant la partie de la bague 4 la plus éloignée axialement de la collerette radiale 17, on obtient un fléchissement des languettes élastiques 18 dans l'espace 19 sans aucune interférence avec les autres portions de la bague intérieure 4.

Dans l'exemple illustré, toutes les languettes 18 sont identiques. En variante cependant, certaines des languettes pourraient être démunies de portée 21 ou de crochet 22.

On notera également à l'examen de la figure 1 que la portion de raidissage 13 de la bague extérieure tournante 9 vient se loger à l'intérieur de l'extrémité de la couronne des languettes 18 qui sont plus longues axialement que la portion cylindrique 16a. Cette configuration permet donc d'accepter aisément un tel retour axial de raidissage 13 pour la bague extérieure 9 sans que le fléchissement des languettes élastiques 18 en soit affecté.

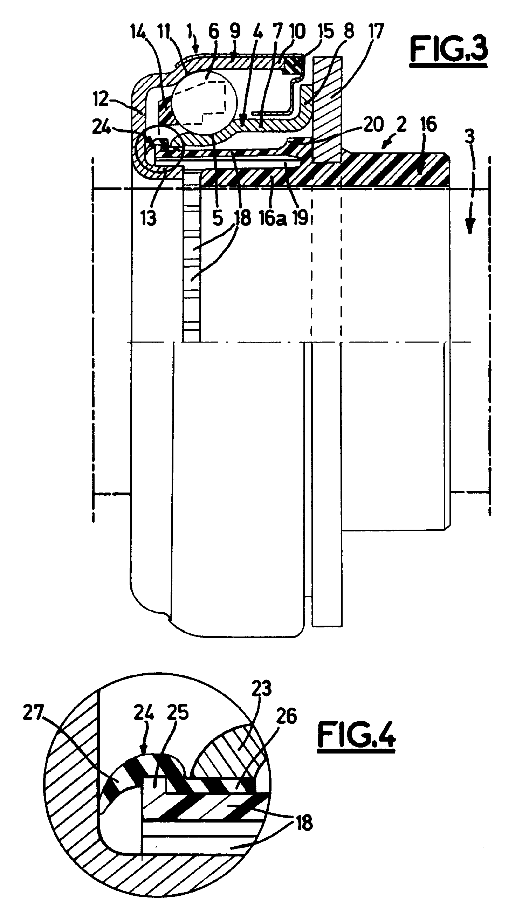

Le mode de réalisation illustré sur les figures 3 et 4 sur lesquelles les pièces identiques portent les mêmes références se différencie essentiellement du mode de réalisation illustré sur les figures 1 et 2 par l'existence d'un joint d'étanchéité supplémentaire référencé 24 dans son ensemble. Le joint 24 est monté à l'extrémité libre de la couronne des languettes 18 sur des excroissances d'extrémité 25 prévues à l'extrémité de chacune des languettes 18. Dans ce mode de réalisation, la surface externe des languettes 18 est sensiblement plane ou légèrement cylindrique. Les surfaces de portée 21 du mode de réalisation des figures 1 et 2 sont remplacées par une portion cylindrique 26 du joint d'étanchéité 24 contre laquelle vient s'appuyer la portion extrême 23 de la bague intérieure non tournante 4. Le joint d'étanchéité présente en outre une lèvre annulaire 27 qui entre en contact d'étanchéité avec la face interne de la collerette annulaire 12 de la bague extérieure tournante 9.

La même précontrainte radiale des languettes élastiques 18 est assurée dans ce mode de réalisation après assemblage du palier à roulement 1 sur la douille de guidage 2.

A part ces différences la structure et le mode de fonctionnement de ce mode de réalisation sont les mêmes que celui du mode de réalisation illustré sur les figures 1 et 2.

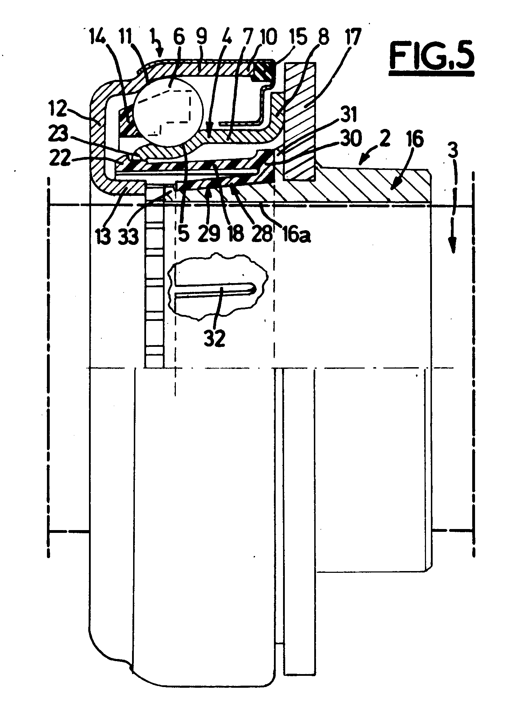

Le mode de réalisation illustré sur la figure 5 se différencie du mode de réalisation illustré sur les figures 1 et 2 par l'adjonction d'un manchon intermédiaire 28 qui vient se monter sur une portée tronconique 29 de la portion 16a de la douille de guidage 2 réalisé en métal. Dans ce mode de réalisation les pièces identiques portent les mêmes références. Pour des raisons de fonctionnement, dans certaines applications, il est nécessaire d'utiliser pour la portion cylindrique 16 de la douille de guidage 2 un métal moulé sous pression tel que de l'aluminium comme illustré sur la figure 5. Le manchon intermédiaire 28 qui vient se monter comme il vient d'être dit sur la douille de guidage 2 sert de support à la couronne de languettes élastiques 18. L'ensemble formé par le manchon 28 et les languettes 18 est avantageusement réalisé d'une seule pièce montée en matière synthétique. Le manchon intermédiaire 28 présente un rebord annulaire 30 qui vient s'appuyer sur une bride 31 de la douille de guidage 2 à proximité de la collerette radiale 17 qui est ici constituée par une plaque métallique réalisée en un autre métal tel que de l'acier ayant subi un traitement de durcissement superficiel. La base de chaque languette élastique 18 est solidaire du rebord 30. Le manchon intermédiaire 28 est également de profil tronconique de façon à coopérer avec le profil correspondant de la portée 29. Pour améliorer l'élasticité lors du montage du manchon intermédiaire 28, des fentes ou encoches axiales 32 sont prévues sur sa périphérie et s'étendent depuis son bord extérieur jusqu'au voisinage du rebord 30. La liaison axiale entre le manchon intermédiaire 28 et la douille de guidage 2 est assurée par l'existence d'une ou plusieurs excroissances d'extrémité 33 ou encore par un rebord périphérique placé à la bordure extérieure de la portion 16a de la douille de guidage 2.

A part ces différences de structure, la configuration ainsi que le fonctionnement de la butée d'embrayage sont les mêmes que dans les modes de réalisation précédents.

Dans tous les modes de réalisation qui viennent d'être décrits, le palier à roulement 1 présente des bagues extérieure et intérieure embouties à partir d'une tôle ou d'un tube. De plus, la bague non tournante est la bague intérieure 4 du palier tandis que la bague tournante est la bague extérieure 9.

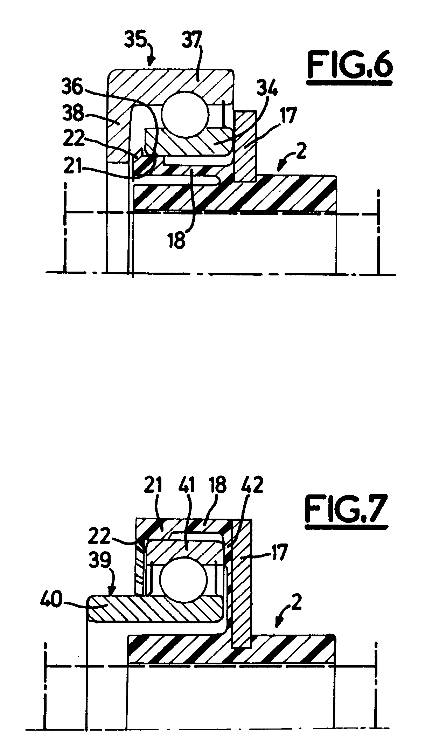

La figure 6 illustre un autre mode de réalisation d'une butée d'embrayage selon l'invention adapté au cas d'un palier à roulement comportant des bagues massives. Les pièces similaires portent les mêmes références que sur les figures précédentes. Dans ce mode de réalisation, la bague intérieure massive non tournante 34 du palier à roulement 35 est en contact de frottement radial avec la collerette radiale 17 de la douille de guidage 2. Une portion 36 de l'alésage de la bague intérieure 34 est en contact avec les portées 21 disposées aux extrémités des languettes élastiques 18. Le maintien axial du palier 35 est assuré par les excroissances formant crochets 22 prévues aux extrémités des languettes 18 comme dans les modes de réalisation précédents. La bague extérieure tournante 37 du palier 35 comporte une collerette sensiblement radiale 38 dirigée vers l'intérieur capable d'entrer en contact avec le diaphragme de l'embrayage lors d'une opération de débrayage.

A part ces différences de structure, le fonctionnement de la butée d'embrayage est le même que dans les modes de réalisation précédents.

Dans le mode de réalisation illustré sur la figure 7 où le palier à roulement 39 présente des bagues massives, c'est la bague intérieure 40 qui est tournante et qui présente une excroissance axiale entrant en contact avec le diaphragme de l'embrayage. La bague extérieure non tournante 41 est en contact avec les portées 21 de languettes élastiques 18, l'ensemble étant maintenu axialement par des crochets d'extrémité 22.

Dans ce mode de réalisation cependant, la base des languettes élastiques 18 est voisine de la partie radiale de plus grand diamètre de la collerette radiale 17. Un voile de matière plastique est prévu sur la face de la collerette 17 en regard du roulement 39 de façon à relier la couronne des languettes élastiques 18 à la portion cylindrique 16 de la douille de guidage 2. Le contact radial de frottement lors des mouvements d'auto-alignement ou d'autocentrage du roulement 39 se fait entre la face frontale de la bague extérieure non tournante 41 et une surface de portée annulaire radiale 42 de la matière plastique moulée faisant partie intégrante de la douille de guidage 2.

On pourrait également envisager de prévoir des passages appropriés à travers la matière plastique pour permettre un contact direct de la bague extérieure non tournante 41 avec la surface métallique de la collerette radiale 10.

Par ailleurs, bien que ce mode de réalisation ait été illustré en association avec un palier à roulement à bagues massives, on comprendra qu'une structure analogue puisse être aisément adaptée au cas d'un palier à roulement comportant des bagues en tôle emboutie comme dans les modes de réalisation illustrés sur les figures 1 à 5 dans lesquels cependant la bague intérieure serait tournante tandis que la bague extérieure serait non tournante, l'invention s'appliquant indifféremment à ces deux configurations.

## Revendications

1. Butée d'embrayage à autocentrage élastique guidé comprenant un palier à roulement (1, 35, 39) muni d'éléments roulants montés entre une bague non tournante et une bague tournante capable de coopérer avec un dispositif d'embrayage, une douille de guidage (2) présentant une portion cylindrique (16) capable de coulisser axialement par rapport à un tube-guide (3) et une collerette radiale (17) en contact de guidage avec une portion de surface radiale de la bague non tournante du palier et adaptée pour transmettre les efforts axiaux d'un organe de commande, la portion cylindrique comprenant une pluralité de languettes élastiques (18) s'étendant axialement à quelque distance radiale du tube-guide et formant une couronne de forme générale cylindrique, au moins certaines desdites languettes entrant en contact, au voisinage de leur extrémité libre opposée à la collerette radiale (17) de la douille de guidage (2), avec la bague non tournante en vue de l'autocentrage élastique de la butée, caractérisée par le fait que les languettes présentent une portée de contact (21) capable de coopérer avec la bague non tournante et une excroissance formant crochet (22) capable d'assurer la liaison axiale entre le palier à roulement et la douille de guidage.

2. Butée d'embrayage selon la revendication 1 caractérisée par le fait que la portée de contact (21) située à l'extrémité libre des languettes (18) présente une dimension axiale telle qu'elle ne coopère qu'avec une zone de contact de la bague non tournante située dans la partie de ladite bague non tournante la plus éloignée axialement de la collerette radiale (17) de la douille de guidage (2).

3. Butée d'embrayage selon l'une des revendications 1 ou 2, caractérisée par le fait que la base des languettes (18) est située au voisinage de la collerette radiale (17) de la douille de guidage (2), les languettes (18) s'étendant axialement sur la majeure partie de la dimension axiale du palier à roulement.

4. Butée d'embrayage selon l'une quelconque des revendications précédentes caractérisée par le fait que chaque languette élastique (18) présente une portée de contact (21) délimitée vers l'extrémité libre de la languette (18) par un crochet (22).

5. Butée d'embrayage selon l'une quelconque des revendications précédentes, caractérisée par le fait que la bague non tournante est la bague intérieure du palier à roulement, la couronne formée par les languettes élastiques (18) étant disposée entre le palier à roulement et la portion cylindrique (16) de la douille de guidage.

6. Butée d'embrayage selon la revendication 5, caractérisée par le fait que la couronne des languettes élastiques (18) s'étend au-delà de la portion cylindrique (16) de la douille de guidage, la bague tournante extérieure présentant une portion de raidissage (13) venant se loger à l'intérieur de l'extrémité de la couronne des languettes (18).

7. Butée d'embrayage selon l'une quelconque des revendications 1 à 4, caractérisée par le fait que la bague non tournante est la bague extérieure du palier à roulement, la base des languettes élastiques étant voisine de la partie radiale de plus grand diamètre de la collerette radiale (17) de la douille de guidage.

8. Butée d'embrayage selon l'une quelconque des revendications précédentes caractérisée par le fait qu'un joint d'étanchéité (24) est disposé à l'extrémité libre de la couronne de languettes élastiques (18) de façon à entrer en contact de frottement avec une portion de la bague tournante.

9. Butée d'embrayage selon la revendication 8, caractérisée par le fait que le joint (24) est monté sur des excroissances d'extrémité (25) des languettes (18) et maintenu serré entre les languettes élastiques (18) et la bague non tournante (4).

10. Butée d'embrayage selon la revendication 9, caractérisée par le fait que le joint d'étanchéité (24) présente une partie annulaire (26) jouant le rôle de portée de contact pour la bague non tournante (4), les languettes (18) présentant une surface sensiblement plane.

11. Butée d'embrayage selon l'une quelconque des revendications précédentes, caractérisée par le fait que la couronne des languettes élastiques est solidaire d'un manchon intermédiaire (28) monté sur la portion cylindrique (16) de la douille de guidage.

12. Butée d'embrayage selon la revendication 11, caractérisée par le fait que la portion cylindrique (16a) de la douille de guidage (2) présente une portée tronconique (29) délimitée par une ou plusieurs excroissances d'extrémité (33) pour le montage et le maintien axial du manchon intermédiaire (28).

13. Butée d'embrayage selon les revendications 11 ou 12, caractérisée par le fait que le manchon intermédiaire (28) présente des encoches axiales (32) sur sa périphérie.

14. Butée d'embrayage selon l'une quelconque des revendications 11 à 13, caractérisée par le fait que la douille de guidage (2) est réalisée en métal et la couronne de languettes élastiques (18) en matière plastique moulée.

15. Butée d'embrayage selon l'une quelconque des revendications 1 à 10, caractérisée par le fait que la couronne des languettes élastiques (18) constitue une seule pièce moulée en matière synthétique avec la portion cylindrique (16) de la douille de guidage (2).

16. Butée d'embrayage selon l'une quelconque des revendications précédentes, caractérisée par le fait que la collerette radiale (17) comprend une plaque métallique fixée sur la douille de guidage.

**Patentansprüche**

1. Selbstzentrierende elastische geführte Kupplungsausrückvorrichtung mit einem Wälzlager (1, 35, 39), das mit Wälzkörpern ausgestattet ist, die zwischen einem nichtdrehenden und einem drehenden Ring montiert sind, der mit einer Kupplungsvorrichtung zusammenwirken kann, ferner mit einer Führungsbuchse (2), die einen zylindrischen Abschnitt (16), der relativ zu einem Führungsrohr (3) axial gleiten kann, sowie einen radialen Kragen (17) aufweist, der mit einem radialen Flächenabschnitt des nichtdrehenden Rings des Lagers in Führungskontakt steht und so angeordnet ist, daß er die axialen Kräfte eines Betätigungsorgangs übertragen kann, wobei der zylindrische Abschnitt mehrere elastische Zungen (18) aufweist, die etwas radialen Abstand von dem Führungsrohr haben und in axialer Richtung verlaufen und die einen Kranz von im wesentlichen zylindrischer Form bilden, wobei wenigstens einige dieser Zungen im Bereich ihres dem radialen Kragen (17) der Führungsbuchse (2) entgegengesetzten freien Ende zum Zwecke der elastischen Zentrierung der Ausrückvorrichtung mit dem nichtdrehenden Ring in Kontakt treten, **dadurch gekennzeichnet**, daß die Zungen eine Kontaktfläche (21) haben, die mit dem nichtdrehenden Ring zusammenwirken kann, sowie einen einen Haken (22) bildenden Ansatz zur Sicherung der axialen Verbindung zwischen dem Wälzlager und der Führungsbuchse.

2.  Kupplungsausrückvorrichtung nach Anspruch 1, dadurch gekennzeichnet, daß die an dem freien Ende der Zungen (18) liegende Kontaktfläche (21) eine solche axiale Länge hat, daß sie nur mit einer Kontaktzone des nichtdrehenden Rings zusammenwirkt, die in demjenigen Teil des nichtdrehenden Rings liegt, der von dem radialen Kragen (17) der Führungsbuchse (2) in axialer Richtung am weitesten entfernt ist.

3.  Kupplungsausrückvorrichtung nach einem der Ansprüche 1 oder 2, dadurch gekennzeichnet, daß die Basis der Zungen (18) in der Nähe des radialen Kragens (17) der Führungsbuchse (2) liegt und daß die Zungen (18) sich in axialer Richtung über den größten Teil der axialen Länge des Wälzlagers erstrecken.

4.  Kupplungsausrückvorrichtung nach einem der vorhergehenden Ansprüche, dadurch gekennzeichnet, daß jede der elastischen Zungen (18) eine Kontaktfläche (21) besitzt, die zum freien Ende der Zunge (18) hin von einem Haken (22) begrenzt wird.

5.  Kupplungsausrückvorrichtung nach einem der vorhergehenden Ansprüche, dadurch gekennzeichnet, daß der nichtdrehende Ring der innere Ring des Wälzlagers ist und daß der von den elastischen Zungen (18) gebildete Kranz zwischen dem Wälzlager und dem zylindrischen Abschnitt (16) der Führungsbuchse liegt.

6.  Kuplungsausrückvorrichtung nach Anspruch 5, dadurch gekennzeichnet, daß der Kranz der elastischen Zungen (18) über den zylindrischen Abschnitt (16) der Führungsbuchse (2) hinausreicht und daß der äußere drehende Ring einen Verstärkungsabschnitt (13) aufweist, der sich ins Innere des Endbereichs des Kranzes von Zungen (18) einfügt.

7.  Kupplungsausrückvorrichtung nach einem der Ansprüche 1 bis 4, dadurch gekennzeichnet, daß der nichtdrehende Ring der äußere Ring des Wälzlagers ist und daß die Basis der elastischen Zungen in der Nähe des durchmessergrößten radialen Teils des radialen Kragens (17) der Führungsbuchse liegt.

8.  Kupplungsausrückvorrichtung nach einem der vorhergehenden Ansprüche, dadurch gekennzeichnet, daß an dem frein Ende des Kranzes von elastischen Zungen (18) eine Dichtung (24) derart angeordnet ist, daß sie mit einem Teil des drehenden Rings in Reibungskontakt tritt.

9.  Kupplungsausrückvorrichtung nach Anspruch 8, dadurch gekennzeichnet, daß die Dichtung (24) auf den an den Enden der Zungen (18) liegenden Ansätzen (25) montiert und zwischen den elastischen Zungen (18) und dem nichtdrehenden Ring (4) eingespannt ist.

10.  Kupplungsausrückvorrichtung nach Anspruch 9, dadurch gekennzeichnet, daß die Dichtung (24) einen ringförmigen Teil (26) aufweist, der die Funktion einer Kontaktfläche für den nichtdrehenden Ring (4) hat und daß die Zungen (18) eine im wesentlichen ebene Fläche haben.

11.  Kupplungsausrückvorrichtung nach einem der vorhergehenden Ansprüche, dadurch gekennzeichnet, daß der Kranz von elastischen Zungen mit einer Zwischenmaschette (28) fest verbuden ist, die auf dem zylindrischen Abschnitt (16) der Führungsbuchse montiert ist.

12.  Kupplungsausrückvorrichtung nach Anspruch 11, dadurch gekennzeichnet, daß der zylindrische Abschnitt (16a) der Führungsbuchse (2) eine von einem oder mehreren Endansätzen (33) begrenzte kegelstumpfförmige Tragfläche (29) für die Montage und die axiale Halterung der Zwischenmanschette (28) aufweist.

13.  Kupplungsausrückvorrichtung nach einem der Ansprüche 11 oder 12, dadurch gekennzeichnet, daß die Zwischenmanschette (28) an ihrem Umfang axiale Einschnitte (32) aufweist.

14.  Kupplungsausrückvorrichtung nach einem der Ansprüche 11 bis 13, dadurch gekennzeichnet, daß die Führungsbuchse (2) aus Metall hergestellt ist und der Kranz von elastischen Zungen (18) ein Kunststoffspritzgußteil ist.

15.  Kupplungsausrückvorrichtung nach einem der Ansprüche 1 bis 10, dadurch gekennzeichnet, daß der Kranz von elastischen Zungen (18) mit dem zylindrischen Abschnitt (16) der Führungsbuchse (2) ein einziges Kunststoffspritzgußteil bildet.

16. Kupplungsausrückvorrichtung nach einem der vorhergehenden Ansprüche, dadurch gekennzeichnet, daß der radiale Kragen (17) eine auf der Führungsbuchse fixierte Metallplatte umfaßt.

## Claims

1. Clutch bearing having resilient guided self-centring, comprising a rolling-contact bearing (1, 35, 39) provided with rolling members mounted between a nonrotatable race and a rotating race capable of cooperating with a clutch device, a guide sleeve (2) having a cylindrical portion (16), which is capable of sliding axially relative to a guide tube (3), and a radial collar (17) in guiding contact with a radial surface portion of the nonrotatable race of the bearing and adapted to transmit the axial forces of an operating member, the cylindrical portion comprising a plurality of resilient tongues (8) extending axially at some radial distance from the guide tube and forming a crown of cylindrical general shape, at least some of said tongues coming into contact, close to their free end remote from the radial collar (17) of the guide sleeve (2), with the nonrotatable race for the purpose of the resilient self-centring of the clutch bearing, characterised in that the tongues have a contact support surface (21), which is capable of cooperating with the non-rotatable race, and a protuberance forming a hook (22) capable of making the axial connection between the rolling-contact bearing and the guide sleeve.

2. Clutch bearing according to Claim 1, characterised in that the contact support surface (21) situated at the free end of the tongues (18) has an axial dimension such that it cooperates only with a contact zone on the non-rotatable race which is situated in that part of said non-rotatable race which is at the greatest axial distance from the radial collar (17) of the guide sleeve (2).

3. Clutch bearing according to one of Claims 1 or 2, characterised in that the base of the tongues (18) is situated near the radial collar (17) of the guide sleeve (2), the tongues (18) extending axially over the greater part of the axial dimension of the rolling-contact bearing.

4. Clutch bearing according to any one of the preceding claims, characterised in that each resilient tongue (18) has a contact support surface (21) bounded in the direction of the free end of the tongue (18) by a hook (22).

5. Clutch bearing according to any one of the preceding claims, characterised in that the non-rotatable race is the inner race of the rolling-contact bearing, the crown formed by the resilient tongues (18) being disposed between the rolling-contact bearing and the cylindrical portion (16) of the guide sleeve.

6. Clutch bearing according to Claim 5, characterised in that the crown of resilient tongues (18) extends beyond the cylindrical portion (16) of the guide sleeve, the outer rotating race having a stiffening portion (13) which takes up position inside the end of the crown of tongues (18).

7. Clutch bearing according to any one of Claims 1 to 4, characterised in that the non-rotatable race is the outer race of the rolling-contact bearing, the base of the resilient tongues being close to the radial part of greatest diameter of the radial collar (17) of the guide sleeve.

8. Clutch bearing according to any one of the preceding claims, characterised in that a seal (24) is disposed at the free end of the crown of resilient tongues (18) in such a manner as to come into frictional contact with a portion of the rotating race.

9. Clutch bearing according to Claim 8, characterised in that the seal (24) is mounted on end protuberances (25) on the tongues (18) and is held gripped between the resilient tongues (18) and the non-rotatable race (4).

10. Clutch bearing according to Claim 9, characterised in that the seal (24) has an annular part (26) serving as contact support surface for the non-rotatable race (4), the tongues (18) having a substantially plane surface.

11. Clutch bearing according to any one of the preceding claims, characterised in that the crown of resilient tongues is fastened to an intermediate sleeve (28) mounted on the cylindrical part (16) of the guide sleeve.

12. Clutch bearing according to Claim 11, characterised in that the cylindrical portion (16a) of the guide sleeve (2) has a frustoconical support surface (29) bounded by one or more end protuberances (33) for the mounting and axial holding of the intermediate sleeve (28).

13. Clutch bearing according to Claim 11 or 12, characterised in that the intermediate sleeve (28) has axial notches (32) on its periphery.

**14.** Clutch bearing according to any one of Claims 11 to 13, characterised in that the guide sleeve (2) is made of metal and the crown of resilient tongues (18) is made of moulded plastics material.

**15.** Clutch bearing according to any one of Claims 1 to 10, characterised in that the crown of resilient tongues (18) together with the cylindrical portion (16) of the guide sleeve (2) constitutes a single piece moulded in synthetic material.

**16.** Clutch bearing according to any one of the preceding claims, characterised in that the radial collar (17) comprises a metal plate fixed on the guide sleeve.

FIG.1

FIG.2

FIG.3

FIG.4

14 11 1 6 9 4 7 10 15 8 17

12

23
22

13 33

5 29 18 28 16a

31
30 2 16 3

32

**FIG.5**

35 37
36
38
22
21
34
17
2
18

**FIG.6**

21 41 18 42
22
39
40
17
2

**FIG.7**